# EUROPÄISCHE PATENTANMELDUNG

(11) **EP 4 033 080 A1**
(43) Veröffentlichungstag der Anmeldung: **27.07.2022**
(21) Anmeldenummer: 21213003.3
(22) Anmeldetag: 08.12.2021
(51) Int. Cl.: F01N 3/24, F02D 9/04, F02D 9/10, F16D 1/108, F16K 1/22, F16K 31/04

(54) **KOPPLUNGSANORDNUNG**

(30) Priorität: 20.01.2021 DE 102021101135
(71) Anmelder: Purem GmbH, 66539 Neunkirchen (DE)
(72) Erfinder: Grün, Matthias, Altbach (DE); Birgler, Markus, Wernau (DE); Lory, Markus, Stuttgart (DE); Wacker, Andreas, Plochingen (DE); Zeumer, Annika, Wernau (DE); Schenk, Ralph, Stuttgart (DE); Novosel, Miljenko, Stuttgart (DE)
(74) Vertreter: Ruttensperger Lachnit Trossin Gomoll

(57) **Zusammenfassung**

Eine Kopplungsanordnung zur Drehkopplung eines Antriebsorgans (34) eines Schwenkantriebs (12) einer Abgasklappe (10) für den Abgasstrom einer Brennkraftmaschine mit einer um eine Schwenkachse (A) drehbaren Schwenkwelle (18) , umfassend ein erstes Kopplungselement (36) mit einem mit einer Schwenkwelle (18) zur gemeinsamen Drehung um die Schwenkachse (A) zu koppelnden Kopplungsbereich (40) , ein zweites Kopplungselement (38) mit einem mit einem Antriebsorgan (34) zur gemeinsamen Drehung um die Schwenkachse (A) zu koppelnden Kopplungsbereich (47) , ein Vorspannorgan (74) zum Erzeugen einer das erste Kopplungselement (36) und das zweite Kopplungselement (38) im Wesentlichen in Umfangsrichtung bezüglich einander beaufschlagenden Kraft, wobei ein Kopplungselement von erstem Kopplungselement (36) und zweitem Kopplungselement (38) wenigstens zwei bezüglich des Kopplungsbereichs (40) dieses Kopplungselements nach radial außen sich erstreckende Drehkopplungsvorsprünge (46, 48) umfasst und das andere Kopplungselement von erstem Kopplungselement (36) und zweitem Kopplungselement 38) in Zuordnung zu jedem Drehkopplungsvorsprung (46, 48) des einen Kopplungselements eine den Drehkopplungsvorsprung (46, 48) aufnehmende Drehkopplungsaussparung (68, 70) umfasst, wobei an jedem Drehkopplungsvorsprung (46, 48) ein Umfangsabstützbereich (76, 78) vorgesehen ist und jede Drehkopplungsaussparung (68, 70) in Umfangsrichtung durch einen Gegen-Umfangsabstützbereich (80, 82) begrenzt ist, wobei der Umfangsabstützbereich (76, 78) jedes in einer Drehkopplungsaussparung (68, 70) aufgenommenen Drehkopplungsvorsprungs (46, 48) durch das Vorspannorgan (74) in Anlage an dem Gegen-Umfangsabstützbereich (80, 82) der einen jeweiligen Drehkopplungsvorsprung (46, 48) aufnehmenden Drehkopplungsaussparung (68, 70) vorgespannt ist, ist dadurch gekennzeichnet, dass an dem einen Kopplungselement in Zuordnung zu wenigstens einem Drehkopplungsvorsprung (48) in Umfangsrichtung an wenigstens einer Seite des Drehkopplungsvorsprungs (48) ein das eine Kopplungselement im Wesentlichen radial bezüglich des anderen Kopplungselements abstützender Radialabstützbereich (96, 98) vorgesehen ist.

## Beschreibung

Die vorliegende Erfindung betrifft eine Kopplungsanordnung zur Kopplung einer Antriebswelle eine Schwenkantrieb seiner Abgasklappe für den Abgasstrom einer Brennkraftmaschine mit einer um eine Schwenkachse drehbaren, eine Klappenblende tragenden Schwenkwelle.

Eine derartige Kopplungsanordnung ist aus der DE 10 2011 107 088 C5 bekannt. Bei dieser Kopplungsanordnung weist das an der Schwenkwelle drehfest gehaltene erste Kopplungselement zwei nach radial außen in Drehkopplungsaussparungen des an dem Antriebsorgan des Schwenkantriebs drehfest gehaltenen zweiten Kopplungselements eingreifende Drehkopplungsvorsprünge auf. Ein Kontakt zwischen den beiden Kopplungselementen besteht zur Minimierung des Wärmeübertrags zwischen diesen ausschließlich im Bereich von an den Drehkopplungsvorsprüngen gebildeten Umfangsabstützbereichen, welche in Umfangsrichtung an die Drehkopplungsvorsprünge aufnehmende Drehkopplungsaussparungen begrenzenden Gegen-Umfangsabstützbereichen abgestützt sind.

Es ist die Aufgabe der vorliegenden Erfindung, eine Kopplungsanordnung zur Drehkopplung eines Antriebsorgans eines Schwenkantriebs einer Abgasklappe für den Abgasstrom einer Brennkraftmaschine mit einer um eine Schwenkachse drehbaren Schwenkwelle vorzusehen, bei welcher eine definierte Positionierung zweier ein Antriebsorgan mit einer Schwenkwelle verbindender Kopplungselemente im Wesentlichen quer zur Schwenkachse sichergestellt ist.

Erfindungsgemäß wird diese Aufgabe gelöst durch eine Kopplungsanordnung zur Drehkopplung eines Antriebsorgans eines Schwenkantriebs einer Abgasklappe für den Abgasstrom einer Brennkraftmaschine mit einer um eine Schwenkachse drehbaren Schwenkwelle gemäß Anspruch 1.

Diese Kopplungsanordnung umfasst:
- ein erstes Kopplungselement mit einem mit einer Schwenkwelle zur gemeinsamen Drehung um die Schwenkachse zu koppelnden Kopplungsbereich,
- ein zweites Kopplungselement mit einem mit einem Antriebsorgan zur gemeinsamen Drehung um die Schwenkachse zu koppelnden Kopplungsbereich,
- ein Vorspannorgan zum Erzeugen einer das erste Kopplungselement und das zweite Kopplungselement im Wesentlichen in Umfangsrichtung bezüglich einander beaufschlagenden Kraft,
wobei ein Kopplungselement von erstem Kopplungselement und zweitem Kopplungselement wenigstens zwei bezüglich des Kopplungsbereichs dieses Kopplungselements nach radial außen sich erstreckende Drehkopplungsvorsprünge umfasst und das andere Kopplungselement von erstem Kopplungselement und zweitem Kopplungselement in Zuordnung zu jedem Drehkopplungsvorsprung des einen Kopplungselements eine den Drehkopplungsvorsprung aufnehmende Drehkopplungsaussparung umfasst, wobei an jedem Drehkopplungsvorsprung ein Umfangsabstützbereich vorgesehen ist und jede Drehkopplungsaussparung in Umfangsrichtung durch einen Gegen-Umfangsabstützbereich begrenzt ist, wobei der Umfangsabstützbereich jedes in einer Drehkopplungsaussparung aufgenommenen Drehkopplungsvorsprungs durch das Vorspannorgan in Anlage an dem Gegen-Umfangsabstützbereich der einen jeweiligen Drehkopplungsvorsprung aufnehmenden Drehkopplungsaussparung vorgespannt ist..

Die Kopplungsanordnung zeichnet sich dadurch aus, dass an dem einen Kopplungselement in Zuordnung zu wenigstens einem Drehkopplungsvorsprung in Umfangsrichtung an wenigstens einer Seite des Drehkopplungsvorsprungs ein das eine Kopplungselement im Wesentlichen radial bezüglich des anderen Kopplungselements abstützender Radialabstützbereich vorgesehen ist.

Bei dem erfindungsgemäßen Aufbau einer Kopplungsanordnung sind die beiden Kopplungselemente nicht nur in Umfangsrichtung bezüglich einander abgestützt, sondern auch über zumindest einen Radialabstützbereich, durch welchen eine definierte Positionierung der beiden Kopplungselemente im Wesentlichen quer zu einer Schwenkachse gewährleistet ist. Zwar wird dadurch im Zusammenhang mit jedem Radialabstützbereich ein zusätzlicher Wärmeübertragungskontakt zwischen den beiden Kopplungselementen eingeführt, doch gewährleistet dieser der Abstützung der beiden Kopplungselemente bezüglich einander im Wesentlichen quer zu deren Schwenkachse dienende Kontakt eine definierte Positionierung der beiden Kopplungselemente bezüglich einander und somit eine definierte Zentrierung derselben bezüglich der Schwenkachse.

Um für einen derartigen Radialabstützbereich an dem einen Kopplungselement ein Widerlager an dem anderen Kopplungselement bereitstellen zu können, wird vorgeschlagen, dass an dem anderen Kopplungselement zum Bereitstellen einer jeweiligen Drehkopplungsaussparung zwei in Richtung von dem Kopplungsbereich des anderen Kopplungselements sich im Wesentlichen axial weg erstreckende, eine Drehkopplungsaussparung zwischen sich begrenzende Drehkopplungsfinger vorgesehen sind, und dass wenigstens ein, vorzugsweise jeder Radialabstützbereich an einem Drehkopplungsfinger abgestützt ist.

Dabei kann für einen stabilen Aufbau an dem anderen Kopplungselement zum Bereitstellen einer jeweiligen Drehkopplungsaussparung ein von dem Kopplungsbereich des anderen Kopplungselements sich im Wesentlichen axial weg erstreckender und zwei Drehkopplungsfinger aufweisender Drehkopplungsarm vorgesehen sein.

Für einen geringen Wärmeübertrag zwischen dem Kopplungsbereich des anderen Kopplungselements und den Drehkopplungsarmen kann in dem Kopplungsbereich des anderen Kopplungselements in Zuordnung zu wenigstens einem, vorzugsweise jedem Drehkopplungsarm eine vorzugsweise T-förmige oder/und auf den zugeordneten Drehkopplungsarm sich zu erstreckende Aussparung ausgebildet sein.

Für eine eine definierte Positionierung der beiden Kopplungselemente bezüglich einander unterstützende Ausgestaltung kann in Zuordnung zu wenigstens einem Drehkopplungsvorsprung in Umfangsrichtung an beiden Seiten des Drehkopplungsvorsprungs ein das eine Kopplungselement im Wesentlichen radial bezüglich des anderen Kopplungselements abstützender Radialabstützbereich vorgesehen sein.

Um auch trotz des erfindungsgemäß eingeführten zusätzlichen Kontakts zwischen den beiden Kopplungselementen den Wärmeübertrag möglichst gering zu halten, wird vorgeschlagen, dass wenigstens ein, vorzugsweise jeder Radialabstützbereich einen mit Umfangsabstand zu dem zugeordneten Drehkopplungsvorsprung angeordneten Radialabstützvorsprung umfasst

Bei einer kompakten, stabilen Bauart kann wenigstens ein, vorzugsweise jeder Radialabstützbereich an einem Außenumfangsbereich des Kopplungsbereichs des einen Kopplungselements vorgesehen sein.

Um eine Überbestimmung in der Positionierung der beiden Kopplungselemente bezüglich einander zu vermeiden, wird vorgeschlagen, dass nur in Zuordnung zu einem einzigen der Drehkopplungsvorsprünge in Umfangsrichtung an wenigstens einer Seite des Drehkopplungsvorsprungs ein das eine Kopplungselement im Wesentlichen radial bezüglich des anderen Kopplungselements abstützender Radialabstützbereich vorgesehen ist.

Insbesondere kann hierbei zur weiteren Minimierung des Wärmeübertrags in einem Umfangsbereich eines Drehkopplungsvorsprungs ohne diesem zugeordnetem Radialabstützbereich der Außenumfangsbereich des Kopplungsbereichs des einen Kopplungselements in radialem Abstand zu dem anderen Kopplungselement angeordnet sein.

Vor allem dann, wenn das Vorspannorgan eine wenigstens einen, vorzugsweise jeden Radialabstützbereich in Anlage an dem anderen Kopplungselement vorspannende Kraft erzeugt, ist für eine definierte Positionierung der beiden Kopplungselemente bezüglich einander die radiale Abstützung der beiden Kopplungselemente bezüglich einander im Bereich eines einzigen Drehkopplungsvorsprungs ausreichend.

Um die beiden Kopplungselemente auch in axialer Richtung definiert bezüglich einander zu halten, wird weiter vorgeschlagen, dass das Vorspannorgan zum Erzeugen einer in axialer Richtung wirkenden Axialkraft zwischen dem ersten Kopplungselement und dem zweiten Kopplungselement ausgebildet ist, dass jede Drehkopplungsaussparung zur Aufnahme des zugeordneten Drehkopplungsvorsprungs axial in Richtung von dem Kopplungsbereich des anderen Kopplungselements weg offen ist, und dass das eine Kopplungselement durch das Vorspannorgan gegen Herausbewegen der Drehkopplungsvorsprünge aus den diese aufnehmenden Drehkopplungsaussparungen an dem anderen Kopplungselement axial gehalten ist.

Für eine in Umfangsrichtung gleichmäßige Verteilung der über die beiden Kopplungselemente zu übertragenden Kraft können an dem einen Kopplungselement zwei bezüglich der Schwenkachse sich im Wesentlichen diametral voneinander weg erstreckende Drehkopplungsvorsprünge vorgesehen sein.

Das Vorspannorgan kann eine Vorspannfeder mit einem bezüglich des ersten Kopplungselements wenigstens in einer ersten Umfangsrichtung und wenigstens axial in Richtung auf das zweite Kopplungselement zu abgestützten, beispielsweise durch einen Windungsendabschnitt bereitgestellten ersten Abstützbereich und einem bezüglich des zweiten Kopplungselements wenigstens in einer der ersten Umfangsrichtung entgegengesetzten zweiten Umfangsrichtung und wenigstens axial in Richtung auf das erste Kopplungselement zu abgestützten, beispielsweise durch einen weiteren Windungsendabschnitt bereitgestellten zweiten Abstützbereich umfassen.

Der Kopplungsbereich des ersten Kopplungselements kann im Wesentlichen plattenartig ausgebildet sein, oder/und der Kopplungsbereich des ersten Kopplungselements kann eine Formschluss-Eingriffsformation zur Drehkopplung mit der Schwenkwelle aufweisen.

Gleichermaßen kann der Kopplungsbereich des zweiten Kopplungselements im Wesentlichen plattenartig ausgebildet sein, oder/und der Kopplungsbereich des zweiten Kopplungselements kann eine Formschluss-Eingriffsformation zur Drehkopplung mit dem Antriebsorgan aufweisen.

Die Erfindung betrifft ferner eine Abgasklappe, insbesondere für den Abgasstrom einer Brennkraftmaschine, umfassend eine im Inneren eines Klappenrohrs an einer um eine Schwenkachse drehbaren Schwenkwelle getragene Klappenblende sowie einen Schwenkantrieb mit einem Antriebsorgan, ferner umfassend eine erfindungsgemäß aufgebaute Kopplungsanordnung zur Drehkopplung der Schwenkwelle mit dem Antriebsorgan.

Die vorliegende Erfindung wird nachfolgend mit Bezug auf die beiliegenden Figuren detailliert beschrieben. Es zeigt:
- Fig. 1: eine Abgasklappe für den Abgasstrom einer Brennkraftmaschine;
- Fig. 2: eine perspektivische Ansicht einer Kopplungsanordnung für eine Abgasklappe;
- Fig. 3: eine Seitenansicht der Kopplungsanordnung der Fig. 2;
- Fig. 4: eine Ansicht der Kopplungsanordnung der Fig. 2 in Blickrichtung IV in Fig. 2.

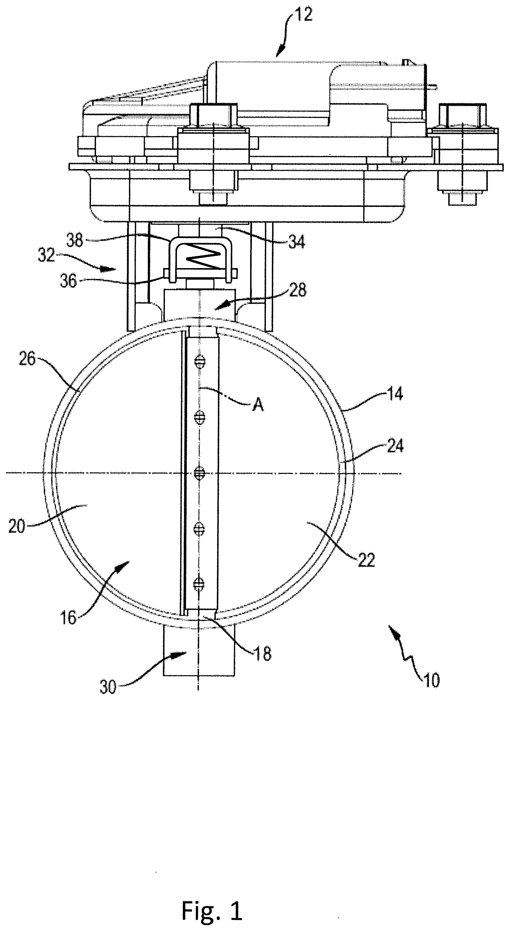

Die Fig. 1 zeigt in Seitenansicht eine allgemein mit 10 bezeichnete und beispielsweise in einer Abgasanlage einer Brennkraftmaschine einsetzbare Abgasklappe mit einem Klappenantrieb 12. Die Abgasklappe 10 umfasst ein Klappenrohr 14, in welchem eine allgemein mit 16 bezeichnete Klappenblende an einer Schwenkwelle 18 um eine Schwenkachse A schwenkbar getragen ist. Die Klappenblende 16 umfasst zwei Klappenflügel 20, 22, welche bei in einer Sperrstellung positionierter Klappenblende 16 an am Innenumfang des Klappenrohrs 14 vorgesehenen Flügelanschlägen 24, 26 anliegen.

Die Schwenkwelle 18 ist an ihren beiden axialen Endbereichen 28, 30 bezüglich des Klappenrohrs 14 vermittels jeweiliger Lageranordnungen um die Schwenkachse A drehbar bzw. schwenkbar getragen. In ihrem ersten axialen Endbereich 28 ist die Schwenkwelle 18 vermittels einer nachfolgend beschriebenen Kopplungsanordnung 32 mit einem Antriebsorgan 34 des Klappenantriebs 12, beispielsweise einer Antriebswelle, zur gemeinsamen Drehung um die Schwenkachse A gekoppelt.

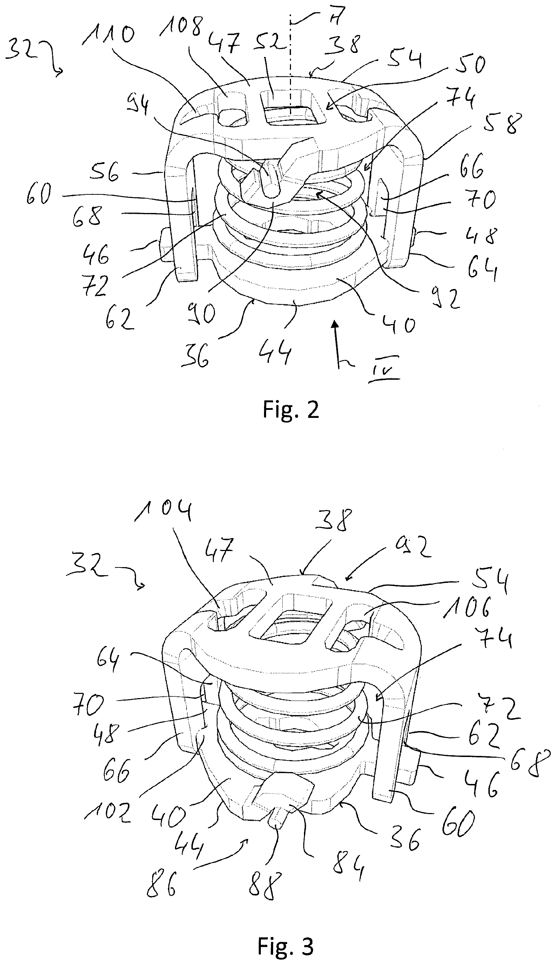

Die Kopplungsanordnung 32 ist in den Fig. 2 bis 4 detailliert dargestellt. Die Kopplungsanordnung 32 umfasst ein an die Schwenkwelle 18 drehfest angekoppeltes erstes Kopplungselement 36 und ein an das Antriebsorgan 34 des Schwenkantriebs 12 drehfest angekoppeltes zweites Kopplungselement 38. Das beispielsweise als Blechteil bereitgestellte erste Kopplungselement 36 umfasst einen plattenartig ausgebildeten Kopplungsbereich 40 mit einer in einem zentralen Bereich ausgebildeten Formschluss-Eingriffsformation 42. Diese ist durch eine Öffnung 43 mit nicht rotationssymmetrischem Öffnungsquerschnitt bereitgestellt, in welche ein entsprechend geformter Abschnitt der Schwenkwelle 18 eingreifend positioniert werden kann. An zwei bezüglich der Schwenkachse einander diametral gegenüberliegend angeordneten Bereichen des Kopplungsbereichs 40 erstrecken sich von einem Außenumfangsbereich 44 desselben zwei Drehkopplungsvorsprünge 46, 48 bezüglich einander diametral nach radial außen.

Das beispielsweise ebenfalls als Blechbauteil bereitgestellte zweite Kopplungselement 38 umfasst einen plattenartigen Kopplungsbereich 47 mit einer in einem zentralen Bereich desselben ausgebildeten Formschluss-Eingriffsformation 50. Auch diese kann eine Öffnung 52 mit bezüglich der Schwenkachse A nicht rotationssymmetrischem Öffnungsquerschnitt aufweisen, in welche ein entsprechend geformter Bereich des Antriebsorgans 34 eingreifend positioniert werden kann. An einem Außenumfangsbereich 54 des plattenartigen Kopplungsbereichs 47 des zweiten Kopplungselements 38 erstrecken sich an bezüglich der Schwenkachse A einander diametral gegenüberliegenden Bereichen Kopplungsarme 56, 58 ausgehend vom Kopplungsbereich 47 im Wesentlichen in Richtung der Schwenkachse A auf das erste Kopplungselement 36 zu. An jedem der beiden Drehkopplungsarme 56, 58 sind zwei sich in Richtung auf das erste Kopplungselement 36 axial zu erstreckende Drehkopplungsfinger 60, 62 bzw. 64, 66 vorgesehen. Die an einem jeweiligen Drehkopplungsarm 56, 58 vorgesehenen Drehkopplungsfinger 60, 62 bzw. 64, 66 begrenzen in Umfangsrichtung zwischen sich jeweils eine Drehkopplungsaussparung 68, 70. Die beiden Drehkopplungsaussparungen sind in Richtung vom Kopplungsbereich 47 des zweiten Kopplungselements 38 weg axial offen, so dass beim Zusammenbau der Kopplungsanordnung 32 das erste Kopplungselement 36 mit seinen beiden Drehkopplungsvorsprüngen 46, 48 in die Drehkopplungsaussparung 68, 70 axial eingeführt werden kann, bis diese zwischen den eine jeweilige Drehkopplungsaussparung 68, 70 begrenzenden Drehkopplungsfingern 60, 62 bzw. 64, 66 in Umfangsrichtung gehalten sind. Es sind am zweiten Kopplungselement 38 jedoch keine das erste Kopplungselement an seiner vom Kopplungsbereich 47 des zweiten Kopplungselements 38 abgewandten Seite hintergreifende und somit einen axialen Formschluss bzw. einen axialen Zusammenhalt der beiden Kopplungselemente 36, 38 erzeugenden Abschnitte vorhanden.

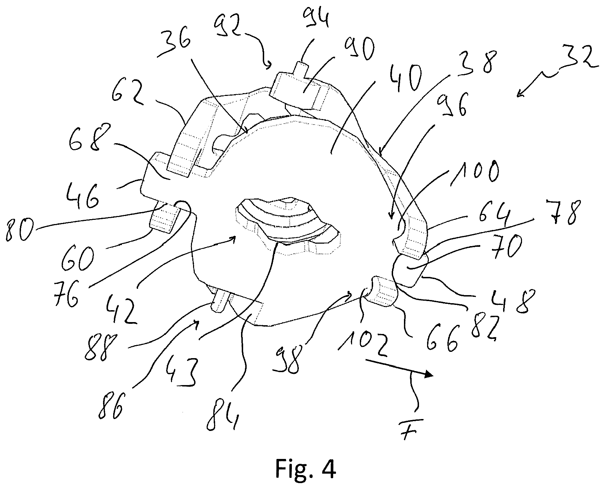

Die Kopplungsanordnung 32 umfasst ferner ein als Vorspannfeder 72, beispielsweise als Schraubenfeder mit mehreren Federwindungen, ausgebildetes Vorspannorgan 74. Die Vorspannfeder 72 ist im Wesentlichen zwischen den beiden Kopplungselementen 36, 38 angeordnet und stützt sich an den einander zugewandten axialen Seiten der Kopplungsbereiche 40, 47 der beiden Kopplungselemente 36, 38 axial ab. Durch dieses Vorspannorgan 74 wird einerseits eine die beiden Kopplungselemente 36, 38 zur Bewegung in Umfangsrichtung bezüglich einander beaufschlagende Umfangskraft erzeugt. In der Darstellung der Fig. 4 beaufschlagt diese Umfangskraft das erste Kopplungselement 36 im Gegenuhrzeigersinn, so dass das erste Kopplungselement 36 mit an den beiden Drehkopplungsvorsprüngen 46, 48 desselben gebildeten Umfangsabstützbereichen 76, 78 in Anlage an an den Drehkopplungsfingern 60 bzw. 64 gebildeten und somit die Drehkopplungsaussparungen 68, 70 in Umfangsrichtung begrenzenden Gegen-Umfangsabstützbereichen 80, 82 vorgespannt sind. Es ist darauf hinzuweisen, dass die Umfangsabstützbereiche 76, 78 bzw. die Gegen-Umfangsabstützbereiche 80, 82 durch in Anlage aneinander bringbare Flächenbereiche der beiden Kopplungselemente 36, 38 bereitgestellt sein können.

Um diese die Kopplungselemente 36, 38 in Umfangsrichtung bezüglich einander beaufschlagende Vorspannkraft zu erzeugen, durch welche die Drehkopplungsvorsprünge 46, 48 in Anlage an den Drehkopplungsfingern 60, 64 vorgespannt sind, weist das erste Kopplungselement 36 am Außenumfangsbereich 44 des Kopplungsbereichs 40 einen durch eine Haltelasche 84 bereitgestellten Haltebereich 86 auf. Die Haltelasche 84 kann beispielsweise durch Abbiegen aus der Ebene des Kopplungsbereichs 40 des ersten Kopplungselements 36 bereitgestellt sein und übergreift einen im Wesentlichen nach radial außen vorstehenden und einen Abstützbereich des Vorspannorgans 74 bereitstellenden Halteschenkel 88 der Vorspannfeder 72 an einer Umfangsseite desselben axial vollständig und an der dem zweiten Kopplungselement 38 zugewandten axialen Seite in Umfangsrichtung im Wesentlichen vollständig. Die Fig. 2 zeigt, dass die Haltelasche 84 den Halteschenkel 88 auch an der anderen Umfangsseite teilweise axial übergreifen kann, um eine in beiden Umfangsrichtungen definierte Halterung des durch einen nach radial außen sich erstreckenden Windungsendbereich der Vorspannfeder 72 bereitgestellten Halteschenkels 88 zu erreichen.

Am zweiten Kopplungselement 38 ist ein gleichermaßen durch eine Haltelasche 90 bereitgestellter Haltebereich 92 für einen Halteschenkel 94 der Vorspannfeder 72 bereitgestellt, welcher durch einen am anderen axialen Ende der Vorspannfeder 72 nach radial außen sich erstreckenden und einen weiteren Abstützbereich des Vorspannorgans 74 bildenden Windungsendbereich bereitgestellt ist. Die Haltelasche 90 übergreift den Halteschenkel 94 axial vollständig und in Umfangsrichtung an der dem ersten Kopplungselement 36 axial zugewandten Seite des Halteschenkels 94. Auch die Haltelasche 90, welche gleichermaßen durch Abbiegen aus der Ebene des Kopplungsbereichs 47 des zweiten Kopplungselements 38 bereitgestellt sein kann, kann den Halteschenkel 94 an der anderen Umfangsseite teilweise axial übergreifen, um auch hier eine in beiden Umfangsrichtungen definierte Positionierung des Halteschenkels 94 zu gewährleisten.

Die beiden Haltebereiche 86, 92 bzw. die Haltelaschen 84, 90 derselben übergreifen die diesen zugeordneten Halteschenkel 88, 94 in zueinander entgegengesetzten axialen Richtungen und Umfangsrichtungen. Somit wird einerseits die Möglichkeit geschaffen, durch vorgespannten Einbau der Vorspannfeder 72 die die beiden Kopplungselemente 36, 38 in Umfangsrichtung bezüglich einander vorspannende Umfangskraft bzw. Tangentialkraft zu erzeugen. Gleichzeitig wird die Möglichkeit geschaffen, die beiden Kopplungselemente 36, 38 vermittels der Vorspannfeder 72 zur Übertragung einer Axialkraft miteinander zu koppeln. Man erkennt, dass die Vorspannfeder 72 in ihren beiden axialen Endbereichen nicht nur vermittels der jeweiligen Haltebereiche 86, 92 mit ihren Halteschenkeln 88, 94 an den Kopplungselementen 36, 38 gehalten ist, sondern mit ihren jeweiligen letzten Windungen an den Kopplungsbereichen 40, 47 derselben axial abgestützt ist. Somit kann bei Bewegung der beiden Kopplungselemente 36, 38 aufeinander zu die Vorspannfeder 72 eine diese in Richtung axial voneinander weg beaufschlagende Axialkraft erzeugen, so dass im Einbauzustand die zwischen der Schwenkwelle 18 und dem Antriebsorgan 34 axial komprimiert gehaltene Kopplungsanordnung 32 eine die Schwenkwelle 18 in Richtung vom Antriebsorgan 34 axial weg beaufschlagende Kraftwirkung erzeugt, wodurch die Schwenkwelle 18 in definierter axialer Positionierung im Klappenrohr 14 gehalten ist.

Dadurch, dass die Halteschenkel 88, 94 durch die diesen jeweils zugeordneten Haltelaschen 84, 90 an der dem jeweils anderen Kopplungselement zugewandten Seite in Umfangsrichtung übergriffen sind, erzeugt die Vorspannfeder 72 auch eine Axialkraft zwischen den beiden Kopplungselementen 36, 38 in Richtung aufeinander zu, wenn auf das Kopplungselement 36 eine diese mit ihren Drehkopplungsvorsprüngen 46, 48 axial aus den zugeordneten Drehkopplungsaussparungen 68, 70 heraus bewegende Kraft einwirkt. In einem in den Fig. 2 bis 4 dargestellten, im Wesentlichen vollständig entspannten Zustand der Vorspannfeder 72 ist das erste Kopplungselement 36 mit seinen Drehkopplungsvorsprüngen 46, 48 in die zugeordneten Drehkopplungsaussparungen 68, 70 eingreifend positioniert und durch die vermittels der Vorspannfeder 72 erzeugte Umfangskraft mit ihren Umfangsabstützbereichen 76, 78 in Anlage an den Gegen-Umfangsabstützbereichen 80, 82 gehalten. Aufgrund der axialen Kraftwirkung der Vorspannfeder 72 wird somit zusätzlich zu der durch den Reibschluss zwischen den aneinander anliegenden Umfangsabstützbereichen 76, 78 und Gegen-Umfangsabstützbereichen 80, 82 eine ein axiales Herausbewegen der Drehkopplungsvorsprünge 46, 48 aus den diese aufnehmenden Drehkopplungsaussparungen 68, 70 verhindernde Axialkraft bereitgestellt. Obgleich die beiden Kopplungselemente 36, 38 aufgrund der axial offenen Drehkopplungsaussparungen 68, 70 somit nicht unmittelbar aneinander axial begrenzt bewegbar gehalten sind, ist mittelbar, nämlich durch die mit den beiden Kopplungselementen 36, 38 verbundene Vorspannfeder 72, eine Verliersicherung für die beiden Kopplungselemente 36, 38 bereitgestellt, welche verhindert, dass die beiden Kopplungselemente 36, 38 vor dem Integrieren in die in Fig. 1 dargestellte Abgasklappe 10 sich voneinander lösen.

Da diese Verliersicherungsfunktion durch die Vorspannfeder 72 bereitgestellt ist, können die die beiden Drehkopplungsvorsprünge 46, 48 aufnehmenden Drehkopplungsaussparungen 68, 70 axial offen ausgebildet werden, was den Zusammenbau der Kopplungsanordnung 32 deutlich vereinfacht. Jedes der beiden Kopplungselemente 36, 38 kann insbesondere im Bereich der Drehkopplungsvorsprünge 46, 48 bzw. der Drehkopplungsarme 56, 58 und der daran vorgesehenen Drehkopplungsfinger 60, 62, 64, 66 vor dem Zusammenfügen mit dem jeweils anderen Kopplungselement in der in den Figuren dargestellten Konfiguration bereitgestellt werden. Es ist beim Zusammenbau der Kopplungsanordnung 32 daher nicht erforderlich, irgendwelche Umformungsmaßnahmen vorzunehmen, um die beiden Drehkopplungsvorsprünge 46, 48 in die diese aufnehmenden Drehkopplungsaussparungen 68, 70 eingreifend positionieren zu können. Es müssen lediglich die beiden Kopplungselemente 36, 38 bei zwischen diesen positionierter Vorspannfeder 72 so bezüglich einander verdreht werden, dass die Drehkopplungsvorsprünge 46, 48 zu den diese aufnehmenden Drehkopplungsaussparungen 68, 70 in Umfangsrichtung ausgerichtet sind, und dann axial aufeinander zu bewegt werden, bis die beiden Drehkopplungsvorsprünge 46, 48 in die Drehkopplungsaussparungen 68, 70 eingreifend positioniert werden. Im Zuge dieser Bewegung kann die Vorspannfeder 72 mit ihren Halteschenkeln 88, 94 sich an den jeweiligen Kopplungsbereichen 40, 47 axial abstützend unter die diesen jeweils zugeordneten Haltelaschen 84, 90 bewegt werden. Ist dieser Zustand erreicht, können diese Haltelaschen 84, 86 mit ihren die zugeordneten Halteschenkel 88, 94 übergreifenden Bereichen wieder geringfügig auf die jeweiligen Kopplungsbereiche 40, 47 zu gebogen werden. Alternativ können die Haltelaschen 84,90 bereits mit der in den Figuren dargestellten Formgebung bereitgestellt werden, und die Vorspannfeder 72 kann durch entsprechende Beaufschlagung der Halteschenkel 88, 94 unter die Haltelaschen 84, 90 bewegt werden.

Durch die Anordnung der Vorspannfeder 72 zwischen den beiden Kopplungselementen 36, 38 in in Umfangsrichtung vorgespanntem Zustand wird nicht nur eine die beiden Kopplungselemente 36, 38 in Umfangsrichtung, also zur Drehung bezüglich einander im Wesentlichen die Schwenkachse A beaufschlagende Kraftwirkung erzeugt, sondern auch eine diese im Wesentlichen radial bzw. quer bezüglich einander beaufschlagende Kraft. In Fig. 4 ist diese näherungsweise radial orientierte Kraft F dargestellt, durch welche das erste Kopplungselement 36 derart belastet wird, dass dieses mit dem Außenumfangsbereich 44 des Kopplungsbereichs 40 in einem dem Drehkopplungsvorsprung 48 nahe liegende Bereich in Richtung auf die Drehkopplungsfinger 64, 66 des zweiten Kopplungselements 38 zu beaufschlagt wird.

Um unter Berücksichtigung dieser Kraft F eine definierte Positionierung der beiden Kopplungselemente 36, 38 quer zur Schwenkachse A bezüglich zueinander zu gewährleisten und insbesondere zu gewährleisten, dass die Öffnungen 43, 52 der Formschluss-Eingriffsformationen 42, 50 bezüglich einander und zur Schwenkwelle A im Wesentlichen zentriert positioniert sind, sind am Außenumfangsbereich 44 des Kopplungsbereichs 40 des ersten Kopplungselements 36 beidseits des Drehkopplungsvorsprungs 48 Radialabstützbereiche 96, 98 vorgesehen. Jeder Radialabstützbereich 96, 98 umfasst einen mit Umfangsabstand zum Drehkopplungsvorsprung 48 vorgesehenen Radialabstützvorsprung 100, 102, mit welchen das erste Kopplungselement 36 an den beidseits des Drehkopplungsvorsprungs 48 positionierten Drehkopplungsfingern 64, 66 nach radial außen abgestützt ist.

Dadurch, dass bei der Kopplungsanordnung 32 das erste Kopplungselement 36 bezüglich des zweiten Kopplungselements 38 nicht nur in Umfangsrichtung durch die aneinander anliegenden bzw. aufeinander zu vorgespannten Umfangsabstützbereiche 76, 78 und Gegen-Umfangsbereiche 80, 82 abgestützt sind, sondern zusätzlich auch eine radiale Abstützung durch einen radial wirkenden Kontakt zwischen den Radialabstützvorsprüngen 100, 102 und den Drehkopplungsfingern 64, 66 erzeugt wird, ist somit auch unterstützt durch die Vorspannwirkung der Vorspannfeder 72 eine definierte Positionierung der beiden Kopplungselemente 36, 38 bezüglich einander quer zur Schwenkachse A gewährleistet. Zwar wird durch den zusätzlichen Kontakt der beiden Kopplungselemente 36, 38 aneinander im Bereich der Radialabstützvorsprünge 100, 102 und der Drehkopplungsfinger 64, 66 ein an sich zu vermeidender zusätzlicher Wärmeübertragungskontakt zwischen den beiden Kopplungselementen 36, 38 eingeführt, doch ist dadurch eine Zwängungen im Schwenkbetrieb vermeidende definierte Positionierung der beiden Kopplungselemente 36, 38 bezüglich einander gewährleistet.

In Zuordnung zu dem anderen Drehkopplungsvorsprung 46 sind keine Radialabstützbereiche bzw. Radialabstützvorsprünge vorgesehen, so dass im Umfangsbereich des Drehkopplungsvorsprungs 46 der Außenumfangsbereich 44 des Kopplungsbereichs 40 einen radialen Abstand zu den Drehkopplungsfingern 60, 62 des zweiten Kopplungselements 38 aufweist. Dadurch wird einerseits ein zu einer zusätzlichen Wärmeübertragung führender Kontakt zwischen den beiden Kopplungselementen 36, 38 in diesem Umfangsbereich vermieden. Andererseits wird keine Überbestimmung in der Positionsdefinierung der beiden Kopplungselemente 36, 38 quer zur Schwenkachse A eingeführt. Es ist eine ausreichend definierte Positionierung allein durch die Radialabstützvorsprünge 100, 102 und die vermittels der Vorspannfeder 72 generierte Kraft F gewährleistet.

Ein weiterer Beitrag zu einem verminderten Wärmeübertrag kann dadurch geleistet werden, dass in dem zweiten Kopplungselement 38 beidseits der im plattenartigen Kopplungsbereich 47 ausgebildeten Öffnung 52 T-förmige Aussparungen 104, 106 gebildet sind, deren T-Balken 108 sich im Wesentlichen entlang der Öffnung 52 im plattenartigen Kopplungsbereich 47 erstreckt, und deren vom jeweiligen T-Balken 108 ausgehender T-Schenkel 110 sich in Richtung von der Öffnung 52 weg aus dem plattenartigen Kopplungsbereich 47 in den Übergangsbereich zu den an den plattenartigen Kopplungsbereich 47 anschließenden Drehkopplungsarmen 56, 58 und beispielsweise auch bis in die Drehkopplungsarme 56, 58 hinein erstrecken. Jede derartige Aussparung 104, 106 trägt insbesondere dann, wenn diese sich durch das Aufbaumaterial des zweiten Kopplungselements 38 vollständig hindurch erstreckt, zu einem deutlich verminderten Wärmeübertragungsquerschnitt bei.

Bei dem vorangehend beschriebenen und in den Figuren dargestellten Aufbau einer Abgasklappe bzw. einer Kopplungsanordnung dafür können verschiedene Aspekte baulich anders ausgeführt sein. So kann beispielsweise ein oder können beide Kopplungselemente mit dem Antriebsorgan bzw. der Schwenkwelle alternativ oder zusätzlich zu dem vorangehend beschriebenen Formschluss auch durch Reibschluss oder/und Materialschluss fest verbunden werden. Selbstverständlich kann die gesamte Kopplungsanordnung in bezüglich der Fig. 1 umgekehrter Anordnung in die Abgasklappe integriert werden, so dass das erste Kopplungselement mit dem Antriebsorgan drehfest verbunden ist und das zweite Kopplungselement mit der Schwenkwelle drehfest verbunden ist. Auch können die am zweiten Kopplungselements vorgesehenen Drehkopplungsaussparungen zwischen jeweiligen über einen größeren Bereich entlang des Außenumfangsbereichs des Kopplungsbereichs des zweiten Kopplungselements sich erstreckenden und axial vom Kopplungsbereich hervorstehenden Wandungsabschnitten begrenzt sein. Im Sinne der vorliegenden Erfindung ist ein einer jeweiligen Drehkopplungsaussparung naheliegender Umfangsendbereich eines derartigen Wandungsabschnitts als Drehkopplungsfinger zu betrachten.

## Patentansprüche

1. Kopplungsanordnung zur Drehkopplung eines Antriebsorgans (34) eines Schwenkantriebs (12) einer Abgasklappe (10) für den Abgasstrom einer Brennkraftmaschine mit einer um eine Schwenkachse (A) drehbaren Schwenkwelle (18), umfassend:
- ein erstes Kopplungselement (36) mit einem mit einer Schwenkwelle (18) zur gemeinsamen Drehung um die Schwenkachse (A) zu koppelnden Kopplungsbereich (40),
- ein zweites Kopplungselement (38) mit einem mit einem Antriebsorgan (34) zur gemeinsamen Drehung um die Schwenkachse (A) zu koppelnden Kopplungsbereich (47),
- ein Vorspannorgan (74) zum Erzeugen einer das erste Kopplungselement (36) und das zweite Kopplungselement (38) im Wesentlichen in Umfangsrichtung bezüglich einander beaufschlagenden Kraft,
wobei ein Kopplungselement von erstem Kopplungselement (36) und zweitem Kopplungselement (38) wenigstens zwei bezüglich des Kopplungsbereichs (40) dieses Kopplungselements nach radial außen sich erstreckende Drehkopplungsvorsprünge (46, 48) umfasst und das andere Kopplungselement von erstem Kopplungselement (36) und zweitem Kopplungselement (38) in Zuordnung zu jedem Drehkopplungsvorsprung (46, 48) des einen Kopplungselements eine den Drehkopplungsvorsprung (46, 48) aufnehmende Drehkopplungsaussparung (68, 70) umfasst, wobei an jedem Drehkopplungsvorsprung (46, 48) ein Umfangsabstützbereich (76, 78) vorgesehen ist und jede Drehkopplungsaussparung (68, 70) in Umfangsrichtung durch einen Gegen-Umfangsabstützbereich (80, 82) begrenzt ist, wobei der Umfangsabstützbereich (76, 78) jedes in einer Drehkopplungsaussparung (68, 70) aufgenommenen Drehkopplungsvorsprungs (46, 48) durch das Vorspannorgan (74) in Anlage an dem Gegen-Umfangsabstützbereich (80, 82) der einen jeweiligen Drehkopplungsvorsprung (46, 48) aufnehmenden Drehkopplungsaussparung (68, 70) vorgespannt ist,
**dadurch gekennzeichnet, dass** an dem einen Kopplungselement in Zuordnung zu wenigstens einem Drehkopplungsvorsprung (48) in Umfangsrichtung an wenigstens einer Seite des Drehkopplungsvorsprungs (48) ein das eine Kopplungselement im Wesentlichen radial bezüglich des anderen Kopplungselements abstützender Radialabstützbereich (96, 98) vorgesehen ist.

2. Kopplungsanordnung nach Anspruch 1, **dadurch gekennzeichnet, dass** an dem anderen Kopplungselement zum Bereitstellen einer jeweiligen Drehkopplungsaussparung (68, 70) zwei in Richtung von dem Kopplungsbereich (47) des anderen Kopplungselements sich im Wesentlichen axial weg erstreckende, eine Drehkopplungsaussparung (68, 70) zwischen sich begrenzende Drehkopplungsfinger (60, 62, 64, 66) vorgesehen sind, und dass wenigstens ein, vorzugsweise jeder Radialabstützbereich (96, 98) an einem Drehkopplungsfinger (60, 62, 64, 66) abgestützt ist.

3. Kopplungsanordnung nach Anspruch 2, **dadurch gekennzeichnet, dass** an dem anderen Kopplungselement zum Bereitstellen einer jeweiligen Drehkopplungsaussparung (68, 70) ein von dem Kopplungsbereich (47) des anderen Kopplungselements sich im Wesentlichen axial weg erstreckender und zwei Drehkopplungsfinger (60, 62, 64, 66) aufweisender Drehkopplungsarm (56, 58) vorgesehen ist, vorzugsweise wobei in dem Kopplungsbereich (47) des anderen Kopplungselements in Zuordnung zu wenigstens einem, vorzugsweise jedem Drehkopplungsarm (56, 58) eine vorzugsweise T-förmige oder/und auf den zugeordneten Drehkopplungsarm (56, 58) sich zu erstreckende Aussparung (104, 106) ausgebildet ist.

4. Kopplungsanordnung nach einem der vorangehenden Ansprüche, **dadurch gekennzeichnet, dass** in Zuordnung zu wenigstens einem Drehkopplungsvorsprung (48) in Umfangsrichtung an beiden Seiten des Drehkopplungsvorsprungs (48) ein das eine Kopplungselement im Wesentlichen radial bezüglich des anderen Kopplungselements abstützender Radialabstützbereich (96, 98) vorgesehen ist.

5. Kopplungsanordnung nach einem der vorangehenden Ansprüche, **dadurch gekennzeichnet, dass** wenigstens ein, vorzugsweise jeder Radialabstützbereich (96, 98) einen mit Umfangsabstand zu dem zugeordneten Drehkopplungsvorsprung (48) angeordneten Radialabstützvorsprung (100, 102) umfasst

6. Kopplungsanordnung nach einem der vorangehenden Ansprüche, **dadurch gekennzeichnet, dass** wenigstens ein, vorzugsweise jeder Radialabstützbereich (96, 98) an einem Außenumfangsbereich (44) des Kopplungsbereichs (40) des einen Kopplungselements vorgesehen ist.

7. Kopplungsanordnung nach einem der vorangehenden Ansprüche, **dadurch gekennzeichnet, dass** nur in Zuordnung zu einem einzigen der Drehkopplungsvorsprünge (46, 48) in Umfangsrichtung an wenigstens einer Seite des Drehkopplungsvorsprungs (48) ein das eine Kopplungselement im Wesentlichen radial bezüglich des anderen Kopplungselements abstützender Radialabstützbereich (96, 98) vorgesehen ist.

8. Kopplungsanordnung nach Anspruch 6 und Anspruch 7, **dadurch gekennzeichnet, dass** in einem Umfangsbereich eines Drehkopplungsvorsprungs (46) ohne diesem zugeordnetem Radialabstützbereich der Außenumfangsbereich (44) des Kopplungsbereichs (40) des einen Kopplungselements in radialem Abstand zu dem anderen Kopplungselement angeordnet ist.

9. Kopplungsanordnung nach einem der vorangehenden Ansprüche, **dadurch gekennzeichnet, dass** das Vorspannorgan (74) eine wenigstens einen, vorzugsweise jeden Radialabstützbereich (96, 98) in Anlage an dem anderen Kopplungselement vorspannende Kraft erzeugt.

10. Kopplungsanordnung nach einem der vorangehenden Ansprüche, **dadurch gekennzeichnet, dass** das Vorspannorgan (74) zum Erzeugen einer in axialer Richtung wirkenden Axialkraft zwischen dem ersten Kopplungselement (36) und dem zweiten Kopplungselement (38) ausgebildet ist, dass jede Drehkopplungsaussparung (68, 70) zur Aufnahme des zugeordneten Drehkopplungsvorsprungs axial in Richtung von dem Kopplungsbereich des anderen Kopplungselements weg offen ist, und dass das eine Kopplungselement durch das Vorspannorgan (74) gegen Herausbewegen der Drehkopplungsvorsprünge (46, 48) aus den diese aufnehmenden Drehkopplungsaussparungen (68, 70) an dem anderen Kopplungselement axial gehalten ist.

11. Kopplungsanordnung nach einem der vorangehenden Ansprüche, **dadurch gekennzeichnet, dass** an dem einen Kopplungselement zwei bezüglich der Schwenkachse (A) sich im Wesentlichen diametral voneinander weg erstreckende Drehkopplungsvorsprünge (46, 48) vorgesehen sind.

12. Kopplungsanordnung nach einem der vorangehenden Ansprüche, **dadurch gekennzeichnet, dass** das Vorspannorgan (74) eine Vorspannfeder (72) mit einem bezüglich des ersten Kopplungselements (36) wenigstens in einer ersten Umfangsrichtung und wenigstens axial in Richtung auf das zweite Kopplungselement (38) zu abgestützten ersten Abstützbereich und einem bezüglich des zweiten Kopplungselements (38) wenigstens in einer der ersten Umfangsrichtung entgegengesetzten zweiten Umfangsrichtung und wenigstens axial in Richtung auf das erste Kopplungselement (36) zu abgestützten zweiten Abstützbereich umfasst.

13. Kopplungsanordnung nach einem der vorangehenden Ansprüche, **dadurch gekennzeichnet, dass** der Kopplungsbereich (40) des ersten Kopplungselements (36) im Wesentlichen plattenartig ausgebildet ist, oder/und dass der Kopplungsbereich (40) des ersten Kopplungselements (36) eine Formschluss-Eingriffsformation (41) zur Drehkopplung mit der Schwenkwelle (18) aufweist.

14. Kopplungsanordnung nach einem der vorangehenden Ansprüche, **dadurch gekennzeichnet, dass** der Kopplungsbereich (47) des zweiten Kopplungselements (38) im Wesentlichen plattenartig ausgebildet ist, oder/und dass der Kopplungsbereich (47) des zweiten Kopplungselements (38) eine Formschluss-Eingriffsformation (50) zur Drehkopplung mit dem Antriebsorgan (34) aufweist.

15. Abgasklappe, insbesondere für den Abgasstrom einer Brennkraftmaschine, umfassend eine im Inneren eines Klappenrohrs (14) an einer um eine Schwenkachse (A) drehbaren Schwenkwelle (18) getragene Klappenblende (16) sowie einen Schwenkantrieb (12) mit einem Antriebsorgan (34), ferner umfassend eine Kopplungsanordnung (32) nach einem der vorangehenden Ansprüche zur Drehkopplung der Schwenkwelle (18) mit dem Antriebsorgan (34).
